# EUROPÄISCHE PATENTSCHRIFT

(11) **EP 3 620 897 B1**
(45) Veröffentlichungstag und Bekanntmachung des Hinweises auf die Patenterteilung: **28.04.2021**
(21) Anmeldenummer: 19189351.0
(22) Anmeldetag: 31.07.2019
(51) Int. Cl.: G06F 3/01, B60D 1/62, B60D 1/36, B60D 1/06

(54) **VERFAHREN UND SYSTEM ZUM AUTOMATISCHEN ERKENNEN EINES ANKUPPELMANÖVERS EINES KRAFTFAHRZEUGS AN EINEN ANHÄNGER**
METHOD AND SYSTEM FOR AUTOMATED DETECTION OF A COUPLING MANOEUVRE OF A MOTOR VEHICLE TO A TRAILER
PROCÉDÉ ET SYSTÈME DE DÉTECTION AUTOMATIQUE D'UNE MAN UVRE D'ACCOUPLEMENT D'UN VÉHICULE AUTOMOBILE À UNE REMORQUE

(30) Priorität: 04.09.2018 DE 102018214973
(43) Veröffentlichungstag der Anmeldung: 11.03.2020
(73) Patentinhaber: Volkswagen AG, 38440 Wolfsburg (DE)
(72) Erfinder: Simon, Kraftschik, 38300 Wolfenbüttel (DE)

(56) Entgegenhaltungen:
- WO-A1-2015/036118
- DE-A1-102009 046 451
- GB-A- 2 513 393
- US-A1- 2015 296 135
- US-A1- 2018 147 900

## Beschreibung

Die Erfindung betrifft ein Verfahren und ein System zum automatischen Erkennen eines Ankuppelmanövers eines Kraftfahrzeugs an einen Anhänger. Des Weiteren betrifft die Erfindung noch ein Kraftfahrzeug mit einem solchen System.

Ein Ankuppelmanöver zum Ankuppeln eines Anhängers an ein Kraftfahrzeug stellt oftmals für viele Fahrer eine große Herausforderung dar. Eine Anhängerkupplung des Anhängers muss dabei mittels einer kraftfahrzeugseitigen Anhängerkupplung präzise getroffen werden. Die Anhängerkupplung des Anhängers ist üblicherweise aber über jeweilige Spiegel des Kraftfahrzeugs und ein Blick nach hinten ab einem gewissen Punkt nicht mehr zu sehen.

Aus dem Stand der Technik sind bereits unterschiedliche Systeme bekannt, welche einen Fahrer bei einem Ankuppelvorgang an einen Anhänger unterstützen können. So zeigt die DE 10 2014 003 953 A1 beispielsweise einen Ankuppelassistenten, der durch Anzeigen einer Trajektorie einen Fahrer beim Ankuppeln an einen Anhänger unterstützen kann. Der Fahrer kann den Ankuppelassistenten beispielsweise manuell aktivieren. Eine automatische Aktivierung des Ankuppelassistenten kann ebenfalls erfolgen, wenn durch Auswertung eines Videobildmaterials der Anhänger im Rückraum des Fahrzeugs festgestellt wird oder beispielsweise ein Rückwärtsgang eingelegt worden ist.

Die DE 10 2014 012 330 A1 zeigt ein Fahrassistenzsystem sowie ein Verfahren zur Durchführung eines Ankuppelvorgangs. In einem Videobild können für einen Fahrer sichtbare Leitmarkierungen als Peilhilfe eingeblendet werden, um ihm den Ankuppelvorgang zu erleichtern. Beispielsweise kann das Fahrassistenzsystem automatisch aktiviert werden, sobald ein Rückwärtsgang eingelegt wurde.

Die DE 10 2015 202 846 A1 beschreibt eine Anzeige eines Kraftfahrzeugs, die sich selbst einschalten oder aktivieren kann, sobald erfasst wird, dass ein Fahrer seinen Blick auf diese Anzeige gelenkt hat. Durch die aktivierte Anzeige kann beispielsweise für den Fahrer ein rückwärtiger Fahrzeugbereich eingeblendet werden.

Die DE 10 2016 122 916 A1 zeigt ein Verfahren zum Betreiben eines Anhängerankuppelassistenten eines Kraftfahrzeugs. Mittels einer oder mehrere Kameras können eine kraftfahrzeugseitige und eine anhängerseitige Anhängerkupplung erkannt und mittels eines Displays im Kraftfahrzeug angezeigt werden. Nach Einleiten eines geführten Ankuppelvorgangs weist eine Steuerung das Display zum Anzeigen der erfassten Anhängerkupplungen an. Der Ankuppelvorgang kann über die Auswahl einer auf dem Display angezeigten Option oder durch Aktivieren einer Taste aktiviert werden.

Die US 2015/0321666 A1 zeigt ein Verfahren zum Ankuppeln eines Anhängers an ein Kraftfahrzeug.

Die DE 102014 114 078A1 zeigt ein Verfahren zum Ankuppeln eines Anhängers an ein Kraftfahrzeug. Sobald ein Fahrer eine automatische Abschlepppositionierung aktiviert hat, fährt das Kraftfahrzeug autonom an den Anhänger heran.

Es ist die Aufgabe der vorliegenden Erfindung, eine Lösung bereitzustellen, mittels welcher einem Fahrer eines Kraftfahrzeugs ein Ankuppelmanöver zum Ankuppeln eines Anhängers erleichtert wird Das Dokument US 2015/296135 A1 offenbart ein Verfahren gemäß dem Oberbegriff des Anspruchs 1.

Diese Aufgabe wird durch ein Verfahren sowie durch ein System zum automatischen Erkennen eines Ankuppelmanövers eines Kraftfahrzeugs an einen Anhänger mit den Merkmalen der unabhängigen Patentansprüche gelöst. Vorteilhafte Ausgestaltungen mit zweckmäßigen und nicht-trivialen Weiterbildungen der Erfindung sind in den abhängigen Ansprüchen angegeben.

Bei dem erfindungsgemäßen Verfahren zum automatischen Erkennen eines Ankuppelmanövers eines Kraftfahrzeugs an einen Anhänger wird eine mittels einer Rückfahrkamera des Kraftfahrzeugs erfasste rückwärtige Fahrzeugumgebung mittels einer Anzeigeeinrichtung des Kraftfahrzeugs angezeigt. Dies kann beispielsweise immer dann automatisch geschehen, sobald ein Rückwärtsgang des Kraftfahrzeugs eingelegt wurde. Anhand einer mittels einer Erfassungseinrichtung des Kraftfahrzeugs erfassten Blickrichtung eines Fahrers des Kraftfahrzeugs wird ermittelt, ob dieser auf die Anzeigeeinrichtung blickt. Falls der Fahrer auf die Anzeigeeinrichtung blickt, wird eine Abfrage ausgegeben, ob der Fahrer des Kraftfahrzeugs eine automatische Aktivierung eines Anhängerankuppelassistenten des Kraftfahrzeugs wünscht, welcher dazu ausgelegt ist, eine Längs- und/oder Querführung des Kraftfahrzeugs zur Unterstützung des Ankuppelmanövers zu übernehmen, wobei nur im Fall einer Bestätigung der Abfrage eine automatische Aktivierung des Anhängerankuppelassistenten erfolgt.

Es ist also erfindungsgemäß vorgesehen, eine Blickrichtungserfassung beziehungsweise ein sogenanntes Eye-Tracking zur Erkennung der Fahrerintension zu nutzen, nämlich um zu ermitteln, ob der Fahrer des Kraftfahrzeugs gerade vorhat, ein Ankuppelmanöver durchzuführen, um das Kraftfahrzeug an einen Anhänger anzukuppeln. Ein Assistenzangebot im Hinblick auf die Aktivierung des Anhängerankuppelassistenten, welcher dazu ausgelegt ist, eine Längs- und/oder Querführung des Kraftfahrzeugs zur Unterstützung des Ankuppelmanövers zu übernehmen, kann mittels des erfindungsgemäßen Verfahrens somit deutlich verbessert werden.

Ein Assistenzvorschlag, also das Ausgeben der besagten Abfrage, ob der Fahrer des Kraftfahrzeugs eine automatische Aktivierung des Anhängerankuppelassistenten wünscht, wird nur noch in der jeweils passenden Situation gemacht. Zudem wird die Aktivierung des Anhängerankuppelassistenten erleichtert, da der Fahrer die Aktivierung nicht mehr selbst über eine Bedienkette vornehmen muss, sondern lediglich das Unterstützungsangebot in Form der ausgegebenen Abfrage akzeptieren muss. Dies kann besonders bei schwierigen Fahraufgaben von großem Vorteil sein, da in diesen Situationen der Fahrer bereits mit dem eigentlichen Handling des Fahrzeugs beschäftigt ist. Die Aktivierung des Anhängerankuppelassistenten kann vor allem in solchen Situationen eher als zusätzliche Belastung statt als Hilfe angesehen werden. Mittels des erfindungsgemäßen Verfahrens hingegen kann durch die Blickrichtungsüberwachung ganz einfach ermittelt werden, ob der Fahrer gerade ein Ankuppelmanöver zum Ankuppeln des Kraftfahrzeugs an einen Anhänger vornehmen möchte, wobei in diesem Falle die besagte Abfrage ausgegeben und sobald der Fahrer diese Abfrage bestätigt hat, der Ankuppelassistent des Kraftfahrzeugs automatisch aktiviert wird.

Eine vorteilhafte Ausführungsform der Erfindung sieht vor, dass die Abfrage nur dann ausgegeben wird, falls innerhalb der rückwärtigen Fahrzeugumgebung der Anhänger erfasst wird. Dadurch kann sichergestellt werden, dass die Ausgabe der besagten Frage, ob der Fahrer des Kraftfahrzeugs die automatische Aktivierung des Anhängerankuppelassistenten wünscht, auch nur in passenden Situationen erfolgt. Denn wenn sich innerhalb der rückwärtigen Fahrzeugumgebung gar kein Anhänger befindet, kann selbst bei einem Blick des Fahrers auf die Anzeigeeinrichtung, mittels welcher der rückwärtige Bereich des Kraftfahrzeugs angezeigt wird, davon ausgegangen werden, dass der Fahrer momentan kein Ankuppelmanöver an einen Anhänger durchführen möchte.

Eine weitere vorteilhafte Ausführungsform der Erfindung sieht vor, dass die Abfrage nur dann ausgegeben wird, falls in der rückwärtigen Fahrzeugumgebung in einem Fahrschlauch des Kraftfahrzeugs der Anhänger erfasst wird. Bei dem Fahrschlauch kann es sich beispielsweise um den Bereich handeln, der von rückseitigen Sensoren des Kraftfahrzeugs überwacht werden kann, wenn der Anhängerankuppelassistent aktiv ist. Auch kann es sich bei dem Fahrschlauch um den Bereichen handeln, den das Kraftfahrzeugs bei dem aktuell eingeschlagenen Lenkwinkel befahren würde, wenn der Fahrer Gas gibt. Wenn der Anhänger innerhalb des Fahrschlauchs erfasst wird, ist mit einer sehr hohen Wahrscheinlichkeit damit zu rechnen, dass der Fahrer ein Ankuppelmanöver plant, wenn er zudem auf die Anzeigeeinrichtung blickt, mittels welcher die rückwärtige Fahrzeugumgebung angezeigt wird.

Gemäß einer weiteren vorteilhaften Ausführungsform der Erfindung ist es vorgesehen, dass der Anhänger in der rückwärtigen Fahrzeugumgebung mittels der Rückfahrkamera, eines Ultraschallsensors, eines Radarsensors und/oder eines Lasersensors erfasst wird. Eine Detektion oder zusätzliche Validierung von durch maschinelles Sehen gelieferten Daten durch die Rückfahrkamera, den Ultraschallsensor, den Radarsensor und/oder den Lasersensor ist also denkbar. Die Überprüfung, ob sich der Anhänger in der rückwärtigen Fahrzeugumgebung befindet, kann also mittels verschiedensten fahrzeugseitigen Sensoren festgestellt werden. So kann auf besonders zuverlässige Weise ermittelt werden, ob sich überhaupt ein Anhänger im rückwärtigen Bereich des Kraftfahrzeugs befindet, wobei vorzugsweise nur in diesem Fall auch die besagte Ausgabe der Abfrage erfolgt, ob der Fahrer des Kraftfahrzeugs eine automatische Aktivierung des Anhängerankuppelassistenten wünscht, sofern der Fahrer denn auch auf die Anzeigeeinrichtung blickt, mittels welcher der rückwärtige Bereich des Kraftfahrzeugs, also die rückwärtige Fahrzeugumgebung, angezeigt wird.

In weiterer vorteilhafter Ausgestaltung der Erfindung ist es vorgesehen, dass die Abfrage nur dann ausgegeben wird, falls anhand der erfassten Blickrichtung des Fahrers ermittelt wird, dass dieser auf eine mittels der Anzeigeeinrichtung angezeigte Anhängerkupplung des Anhängers blickt. Der Erfindung liegt dabei die Erkenntnis zugrunde, dass der Fahrer die Anhängerkupplung des Anhängers - zumindest ab einer gewissen Annäherung an den Anhänger - gar nicht mehr über Rückspiegel oder direkt sehen kann, sondern nur mittels der Anzeigeeinrichtung. Dadurch, dass überprüft wird, ob der Fahrer auf die Anhängerkupplung des Anhängers blickt, welche mittels der Anzeigeeinrichtung angezeigt wird, kann besonders zuverlässig ermittelt werden, ob der Fahrer überhaupt vorhat, ein Ankuppelmanöver durchzuführen. Es wird also überprüft, ob der Fahrer auf die Bildpunkte der Anzeigeeinrichtung blickt, mittels welchen die Anhängerkupplung des Anhängers angezeigt wird.

Eine weitere vorteilhafte Ausführungsform der Erfindung sieht vor, dass die Abfrage nur dann ausgegeben wird, falls anhand der erfassten Blickrichtung des Fahrers ermittelt wird, dass dieser vermehrt auf die Anzeigeeinrichtung geblickt hat. Der Erfindung liegt in diesem Zusammenhang die Erkenntnis zugrunde, dass der Fahrer üblicherweise immer wieder auf die Anzeigeeinrichtung blicken wird, wenn er vorhat, rückwärts an den Anhänger heranzufahren, um das Kraftfahrzeug anzukoppeln. Auch ist es möglich, dass überprüft wird, wie lang der Fahrer seinen Blick durchgehend auf die Anzeigeeinrichtung gerichtet hat, wobei erst wenn er eine vorgegebene Blickzuwendungsdauer überschritten hat, die Abfrage ausgegeben wird. Dies kann auch in Kombination damit erfolgen, dass überprüft wird, ob der Fahrer vermehrt auf die Anzeigeeinrichtung geblickt hat. In beiden Fällen und auch in Kombination ist es möglich, besonders zuverlässig festzustellen, ob der Fahrer tatsächlich vorhat, ein Ankuppelmanöver durchzuführen.

In weiterer vorteilhafter Ausgestaltung der Erfindung ist es vorgesehen, dass die Abfrage nur dann ausgegeben wird, wenn zumindest eine Lenkkorrektur durch den Fahrer erfasst worden ist, nachdem er auf die Anzeigeeinrichtung geblickt hat. Ganz allgemein kann also ein Lenkwinkel zur Verfeinerung der Detektion der Fahrerabsicht im Hinblick auf einen eventuellen Ankuppelvorgang erfolgen. Wird der Lenkwinkel herangezogen und der Fahrer merkt beim Blick auf die Anzeigeeinrichtung, dass er die Anhängerkupplung des Anhängers mit der derzeitigen Trajektorie verfehlt und daraufhin Lenkkorrekturen einleitet, steigt die Wahrscheinlichkeit für ein Ankuppelmanöver. Sieht der Fahrer nämlich durch einen Blick auf die Anzeigeeinrichtung, dass mit seiner derzeitigen Trajektorie die Anhängerdeichsel nicht mit der Anhängerkupplung getroffen wird, wird er eine Lenkbewegung durchführen, die ihn auf die gewünschte Trajektorie bringt. Indem überwacht wird, ob eine solche Lenkkorrektur durch den Fahrer erfolgt, kann besonders zuverlässig ermittelt werden, ob der Fahrer tatsächlich ein Ankuppelmanöver vorhat.

Gemäß einer weiteren vorteilhaften Ausführungsform der Erfindung ist es vorgesehen, dass mittels einer Innenraumkamera der Erfassungseinrichtung die Blickrichtung erfasst wird. Dadurch kann die Blickrichtung des Fahrers besonders zuverlässig erfasst werden. Zusätzlich zur Innenraumkamera können auch andere Sensoren zur Blickrichtungserfassung herangezogen werden. Die Innenraumkamera kann beispielsweise im Bereich eines Lenkrads, eines Rückspiegels oder im Bereich der besagten Anzeigeeinrichtung angeordnet sein. Andere Sensoren statt oder zusätzlich zur Innenraumkamera sind dabei ebenfalls denkbar, um die Blickrichtung des Fahrers zuverlässig zu erfassen.

Das erfindungsgemäße System zum automatischen Erkennen eines Ankuppelmanövers eines Kraftfahrzeugs an einen Anhänger umfasst eine Rückfahrkamera zum Erfassen einer rückwärtigen Fahrzeugumgebung des Kraftfahrzeugs, eine Erfassungseinrichtung zum Erfassen einer Blickrichtung eines Fahrers des Kraftfahrzeugs und eine Steuereinrichtung, welche dazu eingerichtet sind, das erfindungsgemäße Verfahren oder eine vorteilhafte Ausführungsform des erfindungsgemäßen Verfahrens durchzuführen. Vorteilhafte Ausgestaltungen des erfindungsgemäßen Verfahrens sind als vorteilhafte Ausgestaltungen des erfindungsgemäßen Systems und umgekehrt anzusehen, wobei das System insbesondere Mittel zur Durchführung der Verfahrensschritte aufweist.

Das erfindungsgemäße Kraftfahrzeug umfasst das erfindungsgemäße System oder eine vorteilhafte Ausführungsform des erfindungsgemäßen Systems.

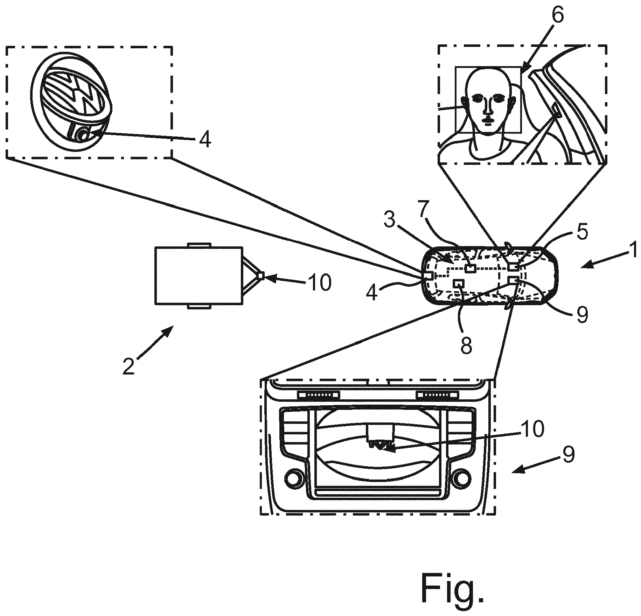

Weitere Vorteile, Merkmale und Einzelheiten der Erfindung ergeben sich aus der nachfolgenden Beschreibung eines bevorzugten Ausführungsbeispiels sowie anhand der Zeichnung.

Die Zeichnung zeigt in der einzigen Figur eine schematische Darstellung eines Kraftfahrzeugs und eines Anhängers, wobei das Kraftfahrzeug ein System zum automatischen Erkennen eines Ankuppelmanövers des Kraftfahrzeugs an den Anhänger aufweist.

Ein Kraftfahrzeug 1 und ein Anhänger 2 sind in einer schematischen Darstellung in der einzigen Figur gezeigt. Das Kraftfahrzeug 1 umfasst ein System 3 zum automatischen Erkennen eines Ankuppelmanövers des Kraftfahrzeugs 1 an den Anhänger 2. Das System 3 umfasst eine Rückfahrkamera 4 zum Erfassen einer rückwärtigen Fahrzeugumgebung des Kraftfahrzeugs 1, eine Erfassungseinrichtung 5 zum Erfassen einer Blickrichtung eines Fahrers 6 des Kraftfahrzeugs 1 und eine Steuereinrichtung 7, welche dazu eingerichtet ist, Sensordaten der Rückfahrkamera 4 und der Erfassungseinrichtung 5 auszuwerten und in Abhängigkeit davon einen Anhängerankuppelassistenten 8 zu aktivieren, welcher dazu ausgelegt ist, eine Längs- und/oder Querführung des Kraftfahrzeugs 1 zur Unterstützung des Fahrers 6 bei einem Ankuppelmanöver an den Anhänger 2 zu übernehmen.

Nachfolgend wird ein Verfahren zum automatischen Erkennen eines Ankuppelmanövers des Kraftfahrzeugs 1 an den Anhänger 2 näher beschrieben. Sobald der Fahrer 6 beispielsweise einen Rückwärtsgang des Kraftfahrzeugs 1 eingelegt hat, wird mittels der Rückfahrkamera 4 eine rückwärtige Fahrzeugumgebung des Kraftfahrzeugs 1 erfasst und mittels einer Anzeigeeinrichtung 9 des Kraftfahrzeugs 1 angezeigt. Die Anzeigeeinrichtung 9 kann sich beispielsweise im Bereich einer Mittelkonsole des Kraftfahrzeugs 1 befinden.

Mittels der Erfassungseinrichtung 5 wird eine Blickrichtung des Fahrers 6 erfasst und anhand dessen ermittelt, ob der Fahrer 6 auf die Anzeigeeinrichtung 9 blickt, mittel welcher die rückwärtige Fahrzeugumgebung angezeigt wird. Falls der Fahrer 6 auf die Anzeigeeinrichtung 9 blicken sollte, wird mittels der Steuereinrichtung 7 die Ausgabe einer Abfrage initiiert, ob der Fahrer 6 eine automatische Aktivierung des Anhängerankuppelassistenten 8 wünscht. Nur im Fall einer Bestätigung dieser Abfrage durch den Fahrer 6 erfolgt eine automatische Aktivierung des Anhängerankuppelassistenten 8, mittels welchem der Fahrer 6 teilautomatisch oder vollautomatisch beim Ankuppeln an den Anhänger 2 unterstützt werden kann, sodass eine hier nicht näher dargestellte Anhängerkupplung des Kraftfahrzeugs 1 passgenau durch entsprechende Ansteuerung des Kraftfahrzeugs 1 an einer Anhängerkupplung 10 des Anhängers 2 positioniert werden kann.

Es kann vorgesehen sein, dass die alleinige Blickzuwendung des Fahrers 6 zur Anzeigeeinrichtung 9 nicht ausreichend ist, um die besagte Abfrage auszugeben, ob der Fahrer 6 eine automatische Aktivierung des Anhängerankuppelassistenten 8 wünscht. Die Abfrage kann beispielsweise akustisch und/oder visuell erfolgen. Dabei kann es vorgesehen sein, dass die Abfrage nur dann ausgegeben wird, falls innerhalb der erfassten rückwärtigen Fahrzeugumgebung auch tatsächlich der Anhänger 2 erfasst wird. Zudem kann es auch vorgesehen sein, dass die Abfrage nur dann ausgegeben wird, falls in der rückwärtigen Fahrzeugumgebung der Anhänger 2 in einem Fahrschlauch erfasst wird. Der Anhänger 2 kann dabei mittels der Rückfahrkamera 4 und/oder auch mittels Ultraschallsensoren, Radarsensoren und/oder Lasersensoren des Kraftfahrzeugs 1 erfasst werden. Die Detektion oder eine zusätzliche Validierung des Anhängers 2 kann also durch verschiedenste Sensoren des Kraftfahrzeugs 1 erfolgen.

Zudem kann es auch vorgesehen sein, dass die Abfrage nur dann ausgegeben wird, falls anhand der erfassten Blickrichtung des Fahrers 6 ermittelt wird, dass dieser auf die mittels der Anzeigeeinrichtung 9 angezeigte Anhängerkupplung 10 des Anhängers 2 blickt. Es ist davon auszugehen, dass der Fahrer 6, sofern er tatsächlich ein Ankuppelmanöver vorhaben sollte, seinen Blick auf die mittels der Anzeigeeinrichtung 9 angezeigte Anhängerkupplung 10 des Anhängers 2 richten wird. Es ist auch recht wahrscheinlich, dass der Fahrer 6 seinen Blick mehrfach auf die Anzeigeeinrichtung 9 richten wird. In dem Zusammenhang kann es vorgesehen sein, dass die besagte Abfrage nur dann ausgegeben wird, falls anhand der erfassten Blickrichtung des Fahrers 6 ermittelt wird, dass dieser vermehrt auf die Anzeigeeinrichtung 9 geblickt hat.

Zudem ist es auch möglich, dass ein Lenkwinkel des Kraftfahrzeugs 1 überwacht wird, wobei die Abfrage beispielsweise nur dann ausgegeben wird, wenn zumindest eine Lenkkorrektur durch den Fahrer 6 erfasst worden ist. Wird der Lenkwinkel herangezogen und der Fahrer 6 merkt bei einem Blick auf die Anzeigeeinrichtung 9, dass er die Anhängerkupplung 10 des Anhängers 2 mit der derzeitigen Trajektorie verfehlen wird und daraufhin Lenkkorrekturen einleitet, steigt die Wahrscheinlichkeit dafür, dass der Fahrer 6 tatsächlich ein Ankuppelmanöver durchführen möchte.
Für die Bestimmung der Blickrichtung des Fahrers 6 kann die Einbaulage der Erfassungseinrichtung 5 entscheidend sein. So kann beispielsweise eine Innenraumkamera, welche Teil der Erfassungseinrichtung 5 sein kann, zum Beispiel im Bereich eines Lenkrads, eines Rückspiegels oder der Anzeigeeinrichtung 9 angeordnet sein, um die Blickrichtung des Fahrers 6 besonders zuverlässig erfassen und basierend darauf bestimmen zu können, ob dieser auf die Anzeigeeinrichtung 9 blickt.

Insgesamt ist es mittels des erläuterten Systems 3 und Verfahrens möglich, besonders zuverlässig automatisch ein von dem Fahrer 6 geplantes Ankuppelmanöver des Kraftfahrzeugs 1 an den Anhänger 2 zu erkennen. Ein Assistenzangebot im Hinblick auf die automatische Aktivierung des Anhängerankuppelassistenten 8 kann dadurch besonders zuverlässig und situationsangepasst genau dann erfolgen, wenn der Fahrer 6 tatsächlich ein Ankuppelmanöver an den Anhänger 2 durchführen möchte.

### Bezugszeichenliste

- 1: Kraftfahrzeug
- 2: Anhänger
- 3: System
- 4: Rückfahrkamera
- 5: Erfassungseinrichtung
- 6: Fahrer
- 7: Steuereinrichtung
- 8: Anhängerankuppelassistent
- 9: Anzeigeeinrichtung
- 10: Anhängerkupplung des Anhängers

## Patentansprüche

1. Verfahren zum automatischen Erkennen eines Ankuppelmanövers eines Kraftfahrzeugs (1) an einen Anhänger (2), umfassend die Schritte:
- Anzeigen einer mittels einer Rückfahrkamera (4) des Kraftfahrzeugs (1) erfassten rückwärtigen Fahrzeugumgebung mittels einer Anzeigeeinrichtung (9) des Kraftfahrzeugs (1);
- Ermitteln anhand einer mittels einer Erfassungseinrichtung (5) des Kraftfahrzeugs (1) erfassten Blickrichtung eines Fahrers (6) des Kraftfahrzeugs (1), ob dieser auf die Anzeigeeinrichtung (9) blickt **gekennzeichnet durch** den Schritt:
- falls der Fahrer (6) auf die Anzeigeeinrichtung (9) blickt: Ausgeben einer Abfrage, ob der Fahrer (6) des Kraftfahrzeugs (1) eine automatische Aktivierung eines Anhängerankuppelassistenten (8) des Kraftfahrzeugs (1) wünscht, welcher dazu ausgelegt ist, eine Längs- und/oder Querführung des Kraftfahrzeugs (1) zur Unterstützung des Ankuppelmanövers zu übernehmen, wobei nur im Fall einer Bestätigung der Abfrage eine automatische Aktivierung des Anhängerankuppelassistenten (8) erfolgt.

2. Verfahren nach Anspruch 1,
**dadurch gekennzeichnet, dass**
die Abfrage nur dann ausgegeben wird, falls innerhalb der rückwärtigen Fahrzeugumgebung der Anhänger (2) erfasst wird.

3. Verfahren nach Anspruch 1 oder 2,
**dadurch gekennzeichnet, dass**
die Abfrage nur dann ausgegeben wird, falls in der rückwärtigen Fahrzeugumgebung in einem Fahrschlauch des Kraftfahrzeugs (1) der Anhänger (2) erfasst wird.

4. Verfahren nach einem der vorhergehenden Ansprüche,
**dadurch gekennzeichnet, dass**
der Anhänger (2) in der rückwärtigen Fahrzeugumgebung mittels der Rückfahrkamera (4), eines Ultraschallsensors, eines Radarsensors und/oder eines Lasersensors erfasst wird.

5. Verfahren nach einem der vorhergehenden Ansprüche,
**dadurch gekennzeichnet, dass**
die Abfrage nur dann ausgegeben wird, falls anhand der erfassten Blickrichtung des Fahrers (6) ermittelt wird, dass dieser auf eine mittels der Anzeigeeinrichtung (9) angezeigte Anhängerkupplung (10) des Anhängers (2) blickt.

6. Verfahren nach einem der vorhergehenden Ansprüche,
**dadurch gekennzeichnet, dass**
die Abfrage nur dann ausgegeben wird, falls anhand der erfassten Blickrichtung des Fahrers (6) ermittelt wird, dass dieser vermehrt auf die Anzeigeeinrichtung (9) geblickt hat.

7. Verfahren nach einem der vorhergehenden Ansprüche,
**dadurch gekennzeichnet, dass**
die Abfrage nur dann ausgegeben wird, wenn zumindest eine Lenkkorrektur durch den Fahrer (6) erfasst worden ist, nachdem er auf die Anzeigeeinrichtung (9) geblickt hat.

8. Verfahren nach einem der vorhergehenden Ansprüche,
**dadurch gekennzeichnet, dass**
mittels einer Innenraumkamera der Erfassungseinrichtung (5) die Blickrichtung erfasst wird.

9. System (3) zum automatischen Erkennen eines Ankuppelmanövers eines Kraftfahrzeugs (1) an einen Anhänger (2), umfassend eine Rückfahrkamera (4) zum Erfassen einer rückwärtigen Fahrzeugumgebung des Kraftfahrzeugs (1), eine Erfassungseinrichtung (5) zum Erfassen einer Blickrichtung eines Fahrers (6) des Kraftfahrzeugs (1) und eine Steuereinrichtung (7), welche dazu eingerichtet sind, ein Verfahren nach einem der der vorhergehenden Ansprüche durchzuführen.

10. Kraftfahrzeug (1) mit einem System (3) nach Anspruch 9.

## Claims

1. Method for automatic detection of a coupling manoeuvre of a motor vehicle (1) to a trailer (2), comprising the steps:
- displaying the surroundings to the rear of a vehicle, captured by means of a reversing camera (4) of the motor vehicle (1), by means of a display device (9) of the motor vehicle (1) ;
- determining a viewing direction, sensed on the basis by means of a sensing device (5) of the motor vehicle (1), of a driver (6) of the motor vehicle (1), whether said driver (6) is looking in the direction of the display device (9), **characterized by** the step:
- if the driver (6) views the display device (9): outputting an enquiry as to whether the driver (6) of the motor vehicle (1) desires automatic activation of a trailer coupling assistant (8) of the motor vehicle (1), which assistant is configured to assume longitudinal and/or transverse guidance of the motor vehicle (1) in order to assist the coupling manoeuvre, wherein automatic activation of the trailer coupling assistant (8) takes place only when the interrogation is confirmed.

2. Method according to Claim 1,
**characterized in that**
the interrogation is output only if the trailer (2) is sensed within the surroundings to the rear of the vehicle.

3. Method according to Claim 1 or 2,
**characterized in that**
the interrogation is output only if the trailer (2) is sensed in the surroundings to the rear of the vehicle in a driving tube of the motor vehicle (1) .

4. Method according to one of the preceding claims,
**characterized in that**
the trailer (2) is sensed in the surroundings to the rear of the vehicle by means of the reversing camera (4) of, an ultrasonic sensor, a radar sensor and/or a laser sensor.

5. Method according to one of the preceding claims,
**characterized in that**
the interrogation is output only if it is determined on the basis of the sensed viewing direction of the driver (6) that said driver is looking at a trailer coupling (10), displayed by means of the display device (9), of the trailer (2) .

6. Method according to one of the preceding claims,
**characterized in that**
the interrogation is output only if it is determined on the basis of the sensed viewing direction of the driver (6) that the driver has looked increasingly at the display device (9).

7. Method according to one of the preceding claims,
**characterized in that**
the interrogation is output only if at least one steering correction has been sensed by the driver (6) after he has looked at the display device (9).

8. Method according to one of the preceding claims,
**characterized in that**
the viewing direction is sensed by means of a passenger compartment camera of the sensing device (5) .

9. System (3) for the automatic detection of a coupling manoeuvre of a motor vehicle (1) to a trailer (2), comprising a reversing camera (4) for capturing the surroundings to the rear of the motor vehicle (1), a sensing device (5) for sensing a viewing direction of the driver (6) of the motor vehicle (1), and a control device (7) which is configured to carry out a method according to one of the preceding claims.

10. Motor vehicle (1) having a system (3) according to Claim 9.

## Revendications

1. Procédé de reconnaissance automatique d'une manœuvre d'attelage d'un véhicule automobile (1) à une remorque (2), comprenant les étapes suivantes :
- affichage d'un environnement de véhicule vers l'arrière, capturé au moyen d'une caméra de marche arrière (4) du véhicule automobile (1), au moyen d'un dispositif d'affichage (9) du véhicule automobile (1) ;
- détermination, à l'aide d'une direction de visée d'un conducteur (6) du véhicule automobile (1), détecté au moyen d'un dispositif de détection (5) du véhicule automobile (1), si celui-ci regarde vers le dispositif d'affichage (9) ;
**caractérisé par** l'étape suivante :
- dans le cas où le conducteur (6) regarde vers le dispositif d'affichage (9) : délivrance d'une demande en vue de savoir si le conducteur (6) du véhicule automobile (1) souhaite une activation automatique d'un assistant d'attelage de remorque (8) du véhicule automobile (1), lequel est conçu pour prendre en charge un guidage longitudinal et/ou transversal du véhicule automobile (1) en vue d'assister la manœuvre d'attelage, une activation automatique de l'assistance d'attelage de remorque (8) n'ayant lieu que dans le cas d'une confirmation de la demande.

2. Procédé selon la revendication 1, **caractérisé en ce que** la demande n'est délivrée que dans le cas où la remorque (2) est détectée au sein de l'environnement de véhicule vers l'arrière.

3. Procédé selon la revendication 1 ou 2, **caractérisé en ce que** la demande n'est délivrée que dans le cas où la remorque (2) est détectée dans l'environnement de véhicule vers l'arrière dans un tunnel de déplacement du véhicule automobile (1).

4. Procédé selon l'une des revendications précédentes, **caractérisé en ce que** la remorque (2) dans l'environnement de véhicule vers l'arrière est détectée au moyen de la caméra de marche arrière (4), d'un capteur à ultrasons, d'un capteur radar et/ou d'un capteur laser.

5. Procédé selon l'une des revendications précédentes, **caractérisé en ce que** la demande n'est délivrée que dans le cas où la direction de visée détectée du conducteur (6) permet de déterminer que celui-ci regarde vers une attache de remorque (10) de la remorque (2) affichée au moyen du dispositif d'affichage (9).

6. Procédé selon l'une des revendications précédentes, **caractérisé en ce que** la demande n'est délivrée que dans le cas où la direction de visée détectée du conducteur (6) permet de déterminer que celui-ci a majoritairement regardé vers le dispositif d'affichage (9).

7. Procédé selon l'une des revendications précédentes, **caractérisé en ce que** la demande n'est délivrée que si au moins une correction de la direction par le conducteur (6) a été détectée après qu'il ait regardé vers le dispositif d'affichage (9).

8. Procédé selon l'une des revendications précédentes, **caractérisé en ce que** la direction de visée est détectée au moyen d'une caméra d'habitacle du dispositif de détection (5).

9. Système (3) de reconnaissance automatique d'une manœuvre d'attelage d'un véhicule automobile (1) à une remorque (2), comprenant une caméra de marche arrière (4) destinée à capturer un environnement de véhicule vers l'arrière du véhicule automobile (1), un dispositif de détection (5) destiné à détecter une direction de visée d'un conducteur (6) du véhicule automobile (1) et un dispositif de commande (7) qui est conçu pour mettre en œuvre un procédé selon l'une des revendications précédentes.

10. Véhicule automobile (1) équipé d'un système (3) selon la revendication 9.
